# EUROPÄISCHE PATENTANMELDUNG

(11) **EP 0 693 510 A1**
(43) Veröffentlichungstag der Anmeldung: **24.01.1996**
(21) Anmeldenummer: 95110666.5
(22) Anmeldetag: 07.07.1995
(51) Int. Cl.: C08F 293/00, C08L 53/00, C08L 55/02, C08L 71/12

(54) **Verfahren zur Herstellung von Blockpolymeren und ihre Verwendung als Haftvermittler**

(30) Priorität: 21.07.1994 DE 4425916
(71) Anmelder: BASF AKTIENGESELLSCHAFT, D-67056 Ludwigshafen (DE)
(72) Erfinder: McKee, Graham Edmund, Dr., D-67433 Neustadt (DE); Knoll, Konrad, Dr., D-67069 Ludwigshafen (DE); Güntherberg, Norbert, Dr., D-67346 Speyer (DE); Gottschalk, Axel, Dr., D-67435 Neustadt (DE)
(74) Vertreter: Geissler, Bernhard, Dr.

(57) **Zusammenfassung**

Bei einem Verfahren zur Herstellung von Blockcopolymeren wird ein Vinylaromat anionisch polymerisiert und die Polymerisationsreaktion anschließend mit Alkylenepithioxid unter Ausbildung merkaptoterminierter Polyvinylaromaten terminiert. Die merkaptoterminierten Vinylaromaten werden in Monomeren gelöst, die anschließend mit freien Radikalen polymerisiert werden.

## Beschreibung

Die Erfindung bezieht sich auf ein neues Verfahren zur Herstellung von Blockcopolymeren und ihre Verwendung als Haftvermittler, vorzugsweise für Polystyrol- und PPE-Blends.

Bekannt sind Poly(phenylenether)-Acrylnitril/Butadien/Styrol (PPE-ABS)-Blends, die ein Polystyrol/Polystyrol-Acrylnitril (PS/PSAN)-Blockcopolymer enthalten. Das Blockcopolymer wird hergestellt, indem ein Polyperoxid in Gegenwart von Styrol und dann in Gegenwart von Styrol-Acrylnitril erhitzt wird. Dabei wird mittels einer bestimmten Temperatur eine Art Kammblockpolymer gebildet. Dieses Polymer wirkt als Haftvermittler in PPE-ABS-Blends. Bei diesem System werden keine Diblockcopolymere gebildet, die sich besser als Haftvermittler als die Kammblockpolymere eignen (JA 3021-656).

Die Herstellung von Blockcopolymeren aus Polystyrol und -caprolacton als Haftvermittler für Polystyrol bzw. PPE-Blends mit Polystyrol-Acrylnitril wird in DE 354 00 45 und DE 354 00 46 beschrieben. Der Nachteil bei der Verwendung der letztgenannten Blockcopolymere besteht darin, daß diese nicht als Haftvermittler für andere Blends, beispielsweise PPE-Polymethylmethacrylat-Blends, eingesetzt werden können, da das Polycaprolacton nicht mit Polymethylmethacrylat verträglich ist. Außerdem ist Polycaprolacton mit Polystyrol-Acrylnitril-Copolymeren nur teilverträglich.

In JP 01/054052 werden Abmischungen aus PPE und ABS beschrieben, wobei Styrol-Methylmethacrylat-Blockcopolymere oder Styrol/Styrol-Acrylnitril-Blockpolymer als Phasenvermittler verwendet werden. Der Nachteil des genannten Systems ist, daß das Polymethylmethacrylat nicht mit allen Polystyrol-Acrylnitril-Copolymeren verträglich ist.

Der Erfindung liegt daher die Aufgabe zugrunde, neue Haftvermittler und ein neues Verfahren zu deren Herstellung zu finden. Vorzugsweise sollen diese neuen Haftvermittler in PPE- und Polystyrol-Blends eingesetzt werden können und insbesondere die mechanischen Eigenschaften solcher Polymermischungen verbessern.

Diese Aufgabe wird erfindungsgemäß durch die beanspruchten Haftvermittlerverbindungen gelöst sowie durch Verfahren zu deren Herstellung, wie sie ebenfalls in den Ansprüchen definiert sind. Bevorzugte Ausführungsformen der Erfindung finden sich in den Unteransprüchen.

Erfindungsgemäß werden die neuen als Haftvermittler geeigneten Blockcopolymeren dadurch hergestellt, daß ein Vinylaromat anionisch polymerisiert wird und die Polymerisationsreaktion anschließend mit Alkylenepithioxid unter Ausbildung merkaptoterminierter Polyvinylaromaten terminiert wird, die merkaptoterminierten Vinylaromaten in Monomeren gelöst werden, die anschließend mit freien Radikalen polymerisiert werden, und daß das gebildete Blockcopolymere gewonnen wird.

Es wurde ein Verfahren zur Herstellung von Blockcopolymeren gefunden, die gute Haftvermittler sind und damit die mechanischen Eigenschaften von PPE- und Polystyrol-Blends verbessern.

Bei dem bevorzugten erfindungsgemäßen Verfahren zur Herstellung von Polystyrol-Blockcopolymeren wird Styrol anionisch polymerisiert und die Reaktion anschließend mit Ethylensulfid terminiert, die Polystyrolketten werden in den Monomeren gelöst und die Monomeren werden mittels freier Radikale polymerisiert.

Das erfindungsgemäße Verfahren weist als erste Stufe die Polymerisation eines Vinylaromaten auf.

Als Vinylaromaten können insbesondere diejenigen mit 8-20 C-Atomen verwendet werden. Bevorzugt sind Styrol, kernalkyliertes Styrol wie Vinyltoluol, p-tert.-Butylstyrol, Vinylnaphthalin, α-Methylstyrol.

Als Polymerisationsinitiator sind Alkalimetallalkyle, insbesondere Lithiumalkyle mit 2-10 Kohlenstoffatomen, bevorzugterweise Butyllithium, und speziell sec.-Butyllithium einsetzbar.

Die Menge des eingesetzten Initiators richtet sich nach der angestrebten Molmasse des Polyvinylaromaten (VA)ₙ, wobei n = mol VA/mol Li-Alkyl.

Als Lösungsmittel werden aprotische Solventien eingesetzt, bevorzugt aliphathische Kohlenwasserstoffe wie Cyclohexan, Methylcyclohexan, aromatische wie Benzol; Toluol, Ethylbenzol. Polymerisationsbeschleunigend und in der Umsetzung mit Ethylensulfid viskositätserniedrigend wirken sich Zusätze von THF, Ethern, tert. Amine aus.

Die Polymerisationstemperatur kann zwischen -78 °C und 130 °C liegen. In Cyclohexan als Lösungsmittel liegt sie bevorzugt zwischen 60 und 100 °C. Die Polymerisationsdauer richtet sich nach dem Abklingen der exothermen Reaktion. Bevorzugt sind Nachreaktionszeiten von 15 bis 90 min vor der Terminierung mit Ethylensulfid.

Die Terminierung der Polymerisation bzw. die Deaktivierung der lebenden Polyvinylaromaten (vorzugsweise Li-Polyvinylaromat) erfolgt erfindungsgemäß bevorzugt mit einem Alkylenepithioxid, insbesondere mit Ethylensulfid. Dabei bilden sich merkaptid-terminierte Polyvinylaromaten der Formel (VA)ₙ - SLi, in der VA das polymerisierte vinylaromatische Monomere, insbesondere also Styrol, n eine Zahl vorzugsweise im Bereich 10 bis 10⁴ bedeuten. Das merkapto-terminierte Polymer der Formel (VA)ₙ - SH wird durch Zusatz einer Thiosäure freigesetzt.

Das Alkylenepithioxid wird vorzugsweise in einer solchen Menge eingesetzt, daß das Molverhältnis von eingesetztem Alkalimetallalkyl zu Alkylensulfid im Bereich 1/1.2 bis 1/0.8, vorzugsweise 1/1.1 bis 1/0.9 liegt.

Als Monomere für den zweiten Block sind folgende Monomere bzw. Monomerengemische bevorzugt einsetzbar:
(1) Styrol/Acrylnitril
(2) (Meth)acrylsäurederivate, vorzugsweise Methylmethacrylat, ggfs. zusammen mit Styrol
(3) Maleinsäureanhydrid / Styrol/Acrylnitril
Die Polymerisation kann in Lösung oder Masse durchgeführt werden. Die Initiierung der Polymerisation kann thermisch, durch Bestrahlung, oder z.B. durch Peroxide oder Azoverbindungen erfolgen.

Bei der Herstellung der Blockcopolymeren liegt das Gewichtsverhältnis von Polyvinylaromat (insbesondere Polystyrol) : Polymer aus oben genannten Monomeren zwischen 90:10 und 10:90.

Die Erfindung wird im folgenden im Zusammenhang mit bevorzugten Ausgangsmaterialen noch näher erläutert. Die anschließenden Beispiele enthalten ebenfalls bevorzugte Arbeitsweisen und Ausgangsmaterialien sowie Verfahrensbedingungen.

Die Herstellung des Polystyrols erfolgt durch anionische Polymerisation mit Hilfe eines Katalysators, vorzugsweise sec-Butyllithium, wobei die lebendigen Polystyrolketten vorzugsweise mit Ethylensulfid terminiert werden können. Die so entstandenen Polystyrolketten besitzen -SH als Endgruppen. Durch Lösen dieser Polymeren in den Monomeren (B), beispielsweise Styrol, Acrylnitril oder Derivate der Methacrylsäure wie Methylmethacrylat, und Polymerisation dieser Monomeren mit freien Radikalen findet an den Merkaptoendgruppen der Polystyrolteilchen eine Kettenübertragungsreaktion statt. Diese fuhrt, ausgehend von dem Schwefelradikal am Ende der Polystyrolketten, zu der Bildung von Blockcopolymeren. Der Reaktionsablauf kann folgendermaßen dargestellt werden:
StStStStStStSt-SH + °BBB-- (wachsende Polymerkette)
--------->
StStStSt-S° + BBB-Kette (entweder Homo- oder Blockcopolymer)
StStStSt° + B
--------->
StStStSt-BBBBBBB-Blockcopolymer
(St bedeutet Styrol)
Dieses Blockcopolymer kann als Haftvermittler in PPE oder Polystyrol-Blends eingesetzt werden.

Für gute Ergebnisse sollte jedoch der B-Teil des Blockcopolymeren mit der anderen Blendkomponente vollkommen oder mindestens teilweise verträglich sein.

Beispiele für die anionische Polymerisation von Styrol werden in "Morton M., Anionic Polymerization, Academic Press, 1983" beschrieben.Für die Polymerisation ist das bevorzugte Lösungsmittel Cyclohexan.

Das Polystyrol kann auch in einer Dispersion (s. auch US 4 829 135) hergestellt werden.

Die Erfindung betrifft außerdem die Verwendung der in dem erfindungsgemäßen Verfahren hergestellten Polystyrol-Blockcopolymere als Haftvermittler.

Der Gehalt an Blockcopolymer, bezogen auf den Polymerteil der Blends (ohne Füllstoffe) liegt zwischen 1 und 25 Gew.%, vorzugsweise zwischen 2 und 15 Gew.%.

Die Erfindung bezieht sich auch auf Polymergemische. Diese Polymergemische bestehen vorzugsweise aus
(a) einer ersten Polymerkomponente, ausgewählt aus der Gruppe von Polyvinylaromaten, insbesondere Polystyrol, Polyarylenethern, insbesondere Polyphenylenether
(b) einer zweiten Polymerkomponente, ausgewählt aus der Gruppe von Styrol-Acrylnitril-Copolymere, ggfs. kautschukmodifiziert, insbesondere durch Copolymerisation mit konjugierten Alkadienen vorzugsweise Butadien und/oder Isopren copolymerisierten SAN-Copolymeren, insbesondere ABS,
   Acrylnitril-Styrol-Acrylester,
   Polymethylmethacrylat,
(c) als Haftvermittler einen gemäß dem erfindungsgemäßen Verfahren hergestellten Blockcopolymeren.

Die Polymergemische können übliche Zusätze wie Füllstoffe, farbgebende Substanzen, faserverstärkende Materialien enthalten.

Solche Blends sind interessant, um die guten Eigenschaften von beiden Blendkomponenten, beispielsweise die hohe Vicat-Erweichungstemperatur und niedrige Flammbarkeit von PPE sowie die gute Ölbeständigkeit von acrylnitrilhaltigen Polymeren, zu kombinieren.

Die Haftvermittler können auch zum Recycling eingesetzt werden, bei dem zwei unverträgliche Polymere, beispielsweise ABS oder ASA mit Polystyrol, anfallen.

### Beispiel 1

### A) Herstellung von merkaptoterminiertem Polystyrol

In einem 10 l Stahlkessel wurden bei 23°C unter Stickstoff und Rühren
3733g Cyclohexan und
1600g Styrol (rein) vorgelegt.
16 mmol sec-Butyllithium (1,5 molar in Cyclohexan) wurden dazugegeben und die Temperatur stieg nach 9 min auf ein Maximum von 74°C an. Nach 50 min war die Temperatur auf 60°C gefallen. Die Polymerisation wurde nach 75 min bei dieser Temperatur mit 17,6 mmol (1,05 ml) Ethylensulfid (Initiator:Ethylensulfid = 1 molar:1,1 molar), anschließend mit 17,6 mmol (1,22 ml) Thioglycolsäure und 30 min später mit 24 mmol (1,85 ml) Isopropanol terminiert.

Die Polymerlösung wurde in Ethanol gefällt, mit Ethanol gewaschen und anschließend bei 65°C im Vakuum getrocknet.

### B) Herstellung eines Blockcopolymeren

In einen Stahlkessel wurden
280g Styrol
120g Acrylnitril
400g Merkapto-terminiertes Polystyrol
1200g Toluol
2,13g Dibenzoylperoxid eingefüllt.

Der Ansatz wurde unter Stickstoff und Rühren auf 95°C erhitzt. Nach 32 Gew.% Umsatz bei der Styrol-Acrylnitril-Polymerisation erfolgte die Zugabe von 2,4g Dicumylperoxid. Die Reaktion wurde bei folgenden Temperaturen fortgesetzt:

3 Stunden bei 110°C, 9 Stunden bei 130°C und anschließend 5 Stunden bei 140°C.

Danach wurde das Polymer in Methanol ausgefällt und getrocknet.

### Beispiel 2

### C) Herstellung der Abmischungen

### a) PPE-ABS-Blends

Eingesetzte Komponenten:
i) Poly(2,6-dimethyl-1,4-phenylenether) (PPE) mit einer reduzierten Viskosität von 0,56 (gemessen als 1 Gew.%ige Lösung in Chloroform bei 30°C nach DIN 53728)
ii) Styrol-Butadien-Blockkautschuk Tufprene A der Firma Asahi
iii) ABS, bestehend aus 29 Teilen eines Polybutadien-Pfropfkautschuks (hergestellt gemäß EP 62 901) und 71 Teilen eines SAN mit 35 Gew% Acrylnitril und einer Viskositätszahl von 80 ml/g
In einem Zweischneckenextruder, ZSK 30 der Fa.Werner und Pfleiderer, wurden bei 280°C die in Tabelle 1 angegebenen Abmischungen hergestellt.
Die Kerbschlagzähigkeit (DIN 53453-Ausgabe 5/75) und Reißfestigkeit (DIN 53455-5 vom August 1981) wurden gemessen.

Die Ergebnisse in Tabelle 1 zeigen die deutliche Verbesserung der mechanischen Eigenschaften unter Verwendung des Blockcopolymers.

**Tabelle 1**

| (Angaben in Gew.-Teilen) | Vergleichsbeispiel | Beispiel 1 | Beispiel 2 |
|---|---|---|---|
| PPE | 40 | 40 | 40 |
| PPE-Schlagzähmodifier (ii) | 5 | 5 | 5 |
| ABS | 55 | 55 | 55 |
| PS/PSAN-Blockcopolymer gem. Beispiel 1 | 0 | 5 | 10 |
| Kerbschlagzähigkeit [kJ/m²] | 0,9 | 3,3 | 4,5 |
| Reißfestigkeit [N/mm²] | 31 | 57 | 62 |

### b) ABS/Polystyrol-Abmischungen

Eingesetzte Komponenten:
i) ABS, bestehend aus 29 Teilen eines Polybutadien-Pfroptkautschuks (hergestellt gemäß EP 62 901) und 71 Teilen eines SAN mit 35 Gew.% Acrylnitril und einer Viskositätszahl von 80 ml/g
ii) Es wurde ein ABS mit einem Schlagfest-Polystyrol (HIPS) (BASF-Produkt KR 2710, hergestellt in einem kontinuierlichen Masseprozeß gemäß DE-A-25 25 019) unter Zugabe der erfindungsgemäßen PS/PSAN-Blockcopolymere in den in Tabelle 2 angegebenen Mengenverhältnissen (in Gew.-Teilen) in einem Laborkneter bei 220°C gemischt.

Aus den Produkten wurden Platten von 1 mm Dicke gepreßt. Aus diesen wurden S1 Probekörper ausgestanzt und Zugversuche nach DIN 53455-3 von August 1981 durchgeführt. Die Ergebnisse sind in Tabelle 2 dargestellt.

Die Mischungen, die unter Zusatz der erfindungsgemäßen Blockcopolymeren hergestellt wurden, zeigen jeweils deutlich eine höhere Zug- und Reißfestigkeit sowie eine größere Reißdehnung.

**Tabelle 2**

| (Angaben in Gew.-Teilen) | Beispiele | | | | |
|---|---|---|---|---|---|
| | 1 | 2 | 3 | 4 | 5 |
| ABS | 70 | 70 | 70 | 70 | 70 |
| HIPS | 30 | 30 | 30 | 30 | 30 |
| S/SAN : 33/67 | -- | 10 | 20 | -- | -- |
| S/SAN : 50/50 | -- | -- | -- | 10 | 20 |
| Zugfestigkeit [N/mm²] | 27,5 | 29,1 | 32,2 | 31,4 | 31,7 |
| Reißfestigkeit [N/mm²] | 27,5 | 28,8 | 31,5 | 30,6 | 30,8 |
| Reißdehnung [%] | 0,8 | 1,8 | 3,1 | 4,0 | 4,8 |

## Patentansprüche

1. Verfahren zur Herstellung von Blockcopolymeren,
**dadurch gekennzeichnet, daß** ein Vinylaromat anionisch polymerisiert wird und die Polymerisationsreaktion anschließend mit Alkylenepithioxid unter Ausbildung merkaptoterminierter Polyvinylaromaten terminiert wird, die merkaptoterminierten Vinylaromaten in Monomeren gelöst werden, die anschließend mit freien Radikalen polymerisiert werden, und daß das gebildete Blockcopolymere gewonnen wird.

2. Verfahren nach Anspruch 1, dadurch gekennzeichnet, daß als Vinylaromat Styrol oder substituiertes Styrol mit 8-20 Kohlenstoffatomen, das ggfs. halogensubstituiert ist, eingesetzt wird.

3. Verfahren nach Anspruch 1 oder 2, dadurch gekennzeichnet, daß als Monomeres solche aus der folgenden Gruppe ausgewählt werden:
1. Styrol/Acrylnitrilgemisch
2. (Meth)acrylsäurederivate, insbesondere Methylmethacrylat eingesetzt wird.

4. Verfahren nach einem der vorhergehenden Ansprüche, dadurch gekennzeichnet, daß das Gewichtsverhältnis von Polyvinylaromat:Monomeren zwischen 90:10 und 10:90 liegt.

5. Verfahren nach einem der vorhergehenden Ansprüche, dadurch gekennzeichnet, daß die anionische Polymerisation des Vinylaromaten in Cyclohexan erfolgt.

6. Verfahren einem der vorhergehenden Ansprüche, dadurch gekennzeichnet, daß die anionische Polymerisation des Vinylaromaten unter Verwendung von Alkalialkyl, insbesondere Lithiumalkyl, bevorzugt sec.-Buthyllithium, durchgeführt wird.

7. Polymer-Blend bestehend aus
a) einer ersten Polymerkomponente ausgewählt aus der Gruppe von
1. Polyarylenethern, insbesondere Polyphenylenether,
2. Polyvinylaromaten, insbesondere Polystyrol,
b) einer zweiten Polymerkomponente ausgewählt aus der Gruppe
1. Styrolacrylnitrilcopolymere, insbesondere alkadienmodifizierte Styrolacrylnitrilcopolymere, vorzugsweise ABS
2. Acrylnitril-Styrol-Acrylester
3. (Meth)acrylsäurepolymere, insbesondere Polymethylmethacrylat
c) einem Haftvermittlerblockcopolymer,
dadurch gekennzeichnet, daß das Haftvermittlerblockcopolymer ein Blockcopolymer hergestellt nach einem der vorhergehenden Verfahrensansprüche ist.

8. Blend nach Anspruch 7, dadurch gekennzeichnet, daß, bezogen auf die Kunststoffanteile a) und b) des Gemisches der Gehalt an Haftvermittlerblockcopolymer im Bereich zwischen 1 und 25 Gew.%, vorzugsweise zwischen 2 und 15 Gew.% liegt.

9. Verwendung von Blockcopolymeren, hergestellt nach einem der vorhergehenden Verfahrensansprüche, als Haftvermittler in Kunststoffzusammensetzungen.
